# EUROPÄISCHE PATENTANMELDUNG

(11) **EP 1 039 170 A2**
(43) Veröffentlichungstag der Anmeldung: **27.09.2000**
(21) Anmeldenummer: 00105803.1
(22) Anmeldetag: 18.03.2000
(51) Int. Cl.: F16H 1/28

(54) **Planetengetriebe**

(30) Priorität: 26.03.1999 DE 19913780
(71) Anmelder: ZF FRIEDRICHSHAFEN Aktiengesellschaft, 88038 Friedrichshafen (DE)
(72) Erfinder: Schulz, Horst, 88045 Friedrichshafen (DE)

(57) **Zusammenfassung**

Das Planetengetriebe mit einem angetriebenen Sonnenrad, einem Hohlrad, Planetenrädern, die auf Planetenachsen in einem Planetenträger dergestalt gelagert sind, daß sie in Zahneingriff mit dem Sonnenrad und dem Hohlrad stehen, weist eine Lageranordnung für die Aufnahme von äußeren Betriebsflanschen auf, welche drei Rollenlager mit zylindrischen Wälzkörpern enthält, von denen zwei als Axiallager (8, 10) mit planen Laufflächen ausgebildet sind, die gegeneinander angestellt sind, während das dritte als Radiallager (9) mit zylindrischen Laufflächen ausgestaltet ist.

## Beschreibung

Die vorliegende Erfindung betrifft ein Planetengetriebe, insbesondere für die Handhabungstechnik, mit einem angetriebenen Sonnenrad, einem Hohlrad und Planetenrädern, die auf Planetenachsen in einem Planetenträger dergestalt gelagert sind, daß sie im Zahneingriff mit dem Sonnenrad und dem Hohlrad stehen sowie mit einer Lageranordnung für die Aufnahme von äußeren Betriebslasten.

Viele Aufgabenstellungen in der Handhabungstechnik verlangen die Realisierung extremer Übersetzungen, wozu Planetengetriebe besonders gut geeignet sind, da sie hohe Übersetzungen mit einer kompakten Bauweise vereinen. Zugleich werden in der Handhabungstechnik zur Leistungsübertragung von hochtourigen Antriebsmotoren hochuntersetzende Getriebe benötigt, die bei einem Lastrichtungswechsel ein kleines Verdrehspiel aufweisen. Außerdem sollen sie sich durch eine drehstarre, leichte und kompakte Bauweise auszeichnen.

Einen wichtigen Anwendungsfall stellen Industrieroboter dar, bei denen Planetengetriebe eingesetzt werden. Für die Präzision dieses Industrieroboters kommt dem Planetengetriebe daher eine zentrale Bedeutung zu. Es müssen präzise Bewegungsabläufe mit höchster Wiederholgenauigkeit gewährleistet sein; für ein derartiges Planetengetriebe sind demzufolge ein geringes einstellbares Verdrehspiel, eine hohe Steifigkeit, ein hoher Wirkungsgrad, eine niedrige Wärmeentwicklung, eine geringe Vibration und eine hohe Laufruhe unabdingbar.

Bekannte Robotergetriebe dieser Art sind üblicherweise mit relativ großen Wälzlagern versehen, durch die alle Kräfte des Roboterarms wie Zug/Druck- und Querkräfte, vor allem jedoch Kippmomente, aufgenommen werden können. Damit funktioniert das Robotergetriebe wie ein angetriebenes Gelenk mit den zwei Hauptfunktionen Übersetzen und Hauptlagerung.

Wesentliche Anforderungen an diese Hauptlagerung insbesondere hinsichtlich der vorkommenden Belastungswerte sind gute Lebensdauer- und Steifigkeitswerte bei maßvollem Bauraumanspruch. Insbesondere hohe Kippmomentbelastungen erfordern jedoch Lager relativ großen Durchmessers, während andererseits der verfügbare Bauraum hinsichtlich des Durchmessers eingeschränkt ist.

Es sind Getriebe bekannt geworden, bei denen ein Paar handelsüblicher Wälzlager mit lagereigenen Innen- und Außenringen die Hauptlagerung bildet. Als Lagertypen werden hierbei sowohl Kugellager wie auch Kegelrollenlager verwendet.

Derartige Lager haben trotz einiger Vorteile bei der Beschaffung den Nachteil, daß die Querschnitte ihrer Außen- und Innenringe nachteilig die Einbauumgebung beeinflussen, d. h. unerwünscht dünnwandig gestaltet werden müssen. Die Paßflächen an den Lagern wie auch an den entsprechenden Aufnahmesitzen sind infolge unvermeidbarer Abweichungen wie beispielsweise Rundlauffehler Störquellen für die gesamte Präzision des Robotergetriebes. Eine hohe Gleichförmigkeit der Übertragung ist aber insbesondere für Roboter erforderlich, die zum Lichtbogenschweißen oder zum Kleben eingesetzt werden.

Es ist ferner ein Planetengetriebe bekannt geworden, welches zwei einzelne auf axiale Distanz plazierte und gegeneinander angestellte Kegelrollenlager aufweist, die jeweils eigene Innen- und Außenringe besitzen. Dieses System erlaubt eine relativ einfache Kontrolle des Lagerspiels bzw. der Lagervorspannung durch axiale Anstellung eines Innenrings über Abstimmscheiben variabler Dicke. Die räumliche Unterbringung des gesamten Lagersystems einschließlich der Innen- und Außenringe ist jedoch nur bei wenigen Getriebebauarten ohne unzulässige Vergrößerung der Außenabmessungen möglich. Weiterhin ist auch der aus der Berührungsgeometrie der Kegelrollen entstehende Druckwinkel bei relativ dünnwandigen Kegelrollenlagern typischerweise nicht sonderlich groß, sodass als Folge die Kippsteifigkeit dieses Lagersystems unbefriedigend ist.

Bekannt ist auch die Anwendung eines Kreuzrollenlagers als einziges Lager, wobei Innen- und Außenringe in die umgebenden Getriebeteile integriert sind. So beschreibt die nicht vorveröffentlichte DE-A 198 21 884.2 der Anmelderin ein Robotergetriebe mit integrierter Lagerung des Roboterarms mit einem angetriebenen Sonnenrad, mit einem ersten und einem zweiten Hohlrad, mit Planetenrädern, die auf Planetenachsen in einem Planetenträger gelagert sind und mit zwei Lagerreihen, deren Laufbahnwinkel eine O-Anordnung bilden, wobei jede Lagerreihe ihre eigene Ringform aufweist, die Ringräume axial parallel versetzt sind und wobei innerhalb eines Ringraumes alle Wälzkörper in gleicher Richtung montiert sind; mit diesem Getriebe kann im Vergleich zum Stand der Technik die doppelte Anzahl an Wälzkörpern montiert werden, wobei die Anzahl der erforderlichen Wälzkörperlaufbahnen auf vier begrenzt ist. Im Gegensatz zum Kreuzrollenlager weist dabei jeder Ringraum statt vier nur zwei Wälzkörperlaufbahnen auf, die direkt in die Getriebebauteile eingearbeitet sind.

Ein Kreuzrollenlager ist lagertechnisch ein zweireihiges Kegelrollenlager mit einem effektiven Druckwinkel von 45°. Die räumliche Unterbringung des gesamten Lagersystems bereitet keinerlei Schwierigkeiten, wobei auch der Druckwinkel von 45° als relativ günstig anzusehen ist. Nachteilig ist jedoch noch der relativ hohe Herstell- und Montageaufwand, der mit Kreuzrollenlagern verbunden ist, da die Wälzkörper in umständlicher Weise über Füllöffnungen in die ansonsten vollständig abgeschlossene Laufbahn-Ringkammer eingebracht werden müssen. Weiterhin ist beim Kreuzrollenlager die Kontrolle des Lagerspiels und damit der Lagervorspannung nur streuungsbehaftet möglich und zwar über eine vorherige Vermessung der vier Innenring-/Außenring-Laufbahnen und hieraus folgender Auswahl der Wälzkörper-Sortierung.

Aufgabe der vorliegenden Erfindung ist es, ein Planetengetriebe für die Handhabungstechnik zu schaffen, das eine Lageranordnung aufweist, die in Herstellung der Einzelteile und Montage besonders kostengünstig ist und bei der eine Kontrolle des Lagerspiels bzw. der Lagervorspannung in engen Grenzen und auf einfachste Weise möglich ist; zusätzlich soll die erfindungsgemäße Lageranordnung entweder gegenüber auftretenden Kippmomenten steifer sein als die bisherigen Lageranordnungen bzw. bei gleicher Steifigkeit kleinere und damit kostengünstigere Bauteile ermöglichen.

Ausgehend von einem Planetengetriebe der eingangs näher genannten Art erfolgt die Lösung dieser Aufgabe mit den im kennzeichnenden Teil des Anspruchs 1 angegebenen Merkmalen; vorteilhafte Ausgestaltungen sind in den Unteransprüchen beschrieben.

Die erfindungsgemäße Lageranordnung dient also als Hauptlager für die Aufnahme von äußeren, beispielsweise aus einem Roboterarm kommenden kombinierten Betriebslasten, wie Kippmomenten, Radial- und Axialkräften in spielarmen Planetengetrieben, vorzugsweise in Robotergetrieben. Die typischen Anforderungen für Lageranordnungen dieser Art, insbesondere die Fähigkeit, hohe Kippmomente bei guter Steifigkeit aufnehmen zu können, erfordert es, daß die Lageranordnung Kegelrollen, Zylinderrollen oder Lagerborde aufweist, d. h. Wälzkörper mit Linienberührung.

Im folgenden wird die Erfindung anhand der Zeichnung näher erläutert, in der zwei vorteilhafte Ausführungsbeispiele dargestellt sind. Es zeigen:
- Fig. 1: einen Schnitt durch ein erstes Ausführungsbeispiel;
- Fig. 2: einen Schnitt durch ein zweites Ausführungsbeispiel eines erfindungsgemäßen Planetengetriebes und
- Fig. 3: ein Segment eines Axiallagerringes.

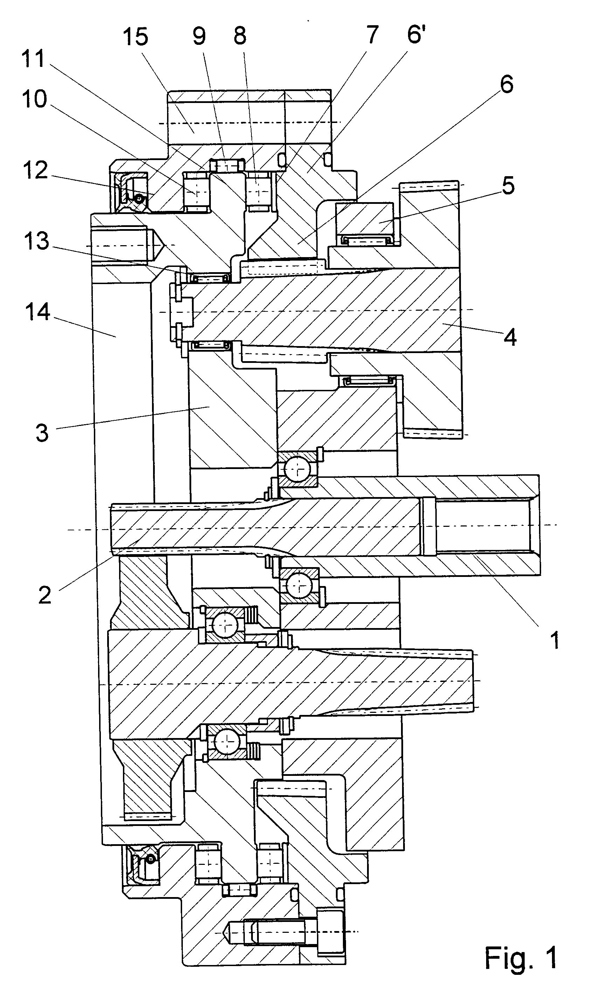

In den Figuren, in denen gleiche Teile mit gleichen Bezugszeichen versehen sind, bezeichnet 1 die Antriebswelle des erfindungsgemäßen Planetengetriebes, 2 das Sonnenrad, 3, 5 den zweiteilig ausgeführten Planetenträger, 4 ein Planetenrad in Form eines Stufenplaneten und 6 das Hohlrad. Die Lageranordnung besteht aus einem ersten äußeren Lagerbord 6', der einstückig mit dem Hohlrad 6 ist und aus einem zweiten äußeren Lagerbord 12, das einstückig mit dem in radialer Hinsicht äußeren Befestigungsflansch 15 des Getriebes ist und aus einem mittleren Lagerbord 11, der bei diesem Ausführungsbeispiel gemäß Fig. 1 einstückig mit dem inneren umlaufenden Planetenträger 3 ist. Zu beiden Seiten des mittleren Lagerbordes 11 sind zwei Axiallager 8, 10 vorgesehen, die als Rollenlager mit zylindrischen Wälzkörpern ausgestaltet sind, mit plangestalteten Laufflächen an beiden Seiten des mittleren Lagerbordes 11, sodass ein Druckwinkel von 90° eingehalten wird; die beiden Axiallager 8, 10 sind gegeneinander angestellt. Ein drittes Rollenlager als reines Radiallager 9 mit zylindrischen Laufflächen umgibt den mittleren Lagerbord 11.

Bei diesem Ausführungsbeispiel ist also der mittlere Lagerbord an dem inneren umlaufenden Getriebeteil befestigt und die beiden axial äußeren Lagerborde integrierter Bestandteil des in radialer Hinsicht äußeren Befestigungsflansches bzw. Hohlrades des Getriebes. Dieses ist axial zweigeteilt, um eine nach der Montage verschließbare Ringkammer zu bilden, die nach innen offen ist. Beide Teile des Befestigungsflansches und damit die axiale Lageranordnung werden nach dem Einbau in das Planetengetriebe durch starke zahlreiche und ohnehin vorhandene Befestigungsschrauben zusammengehalten, was für die Steifigkeit der Lageranordnung wichtig ist.

Bei einem anderen, nicht dargestellten Ausführungsbeispiel kann der mittlere Lagerbord mit dem äußeren in der Regel stehenden Befestigungsflansch des Planetengetriebes verbunden sein, während die beiden axial äußeren Lagerborde integrierter Bestandteil des radial inneren umlaufenden Planetenträgers sind. Das Getriebe ist auch hierbei axial zweigeteilt, um eine nach der Montage verschließbare Ringkammer zu bilden, die nach außen offen ist. Beide Teile des umlaufenden inneren Planetenträgers und damit die axiale Lageranordnung werden bei der Montage durch interne Verbindungsschrauben zusammengehalten.

Mit 7 ist eine Abstimmscheibe bezeichnet, mit für Lageroberflächen geeigneter Härte und Oberflächendicke und mit feingestafelter variabler Dicke, die im Rollkontakt mit einem der beiden Axiallager, hier dem Lager 8, steht.

Zur Ermittlung der richtigen Dicke der Abstimmscheibe 7 wird zunächst eine deutlich dickere Meßscheibe mit genau bekannter Dicke anstelle der später zu montierenden Abstimmscheibe eingebaut. Die axial äußeren Lagerteile klaffen dadurch axial geringfügig auseinander. Anschließend wird eine axiale Vorlast aufgebracht, ggf. mit Messung des Drehwiderstandes der Lageranordnung als Merkmal für die Lagervorspannung. Anschließend wird das Spaltmaß an den axial auseinanderklaffenden Bauteilen gemessen und von der bekannten Dicke der Scheibe abgezogen, wodurch die erforderliche Dicke für die Abstimmscheibe 7 ermittelt wird.

Das Radiallager 9 ist, axial gesehen, zwischen den beiden Axiallagern 8, 10 angeordnet, wobei der mittlere Lagerbord 11 vorzugsweise auf allen drei Seiten mit Lagerlaufbahnen versehen ist. Dies bietet den Vorteil eines günstigen Raumbedarfs und guter Zentrierbedingungen für das gesamte Planetengetriebe.

Das Radiallager 9 kann auch axial entfernt von den beiden Axiallagern 8, 10 angeordnet werden.

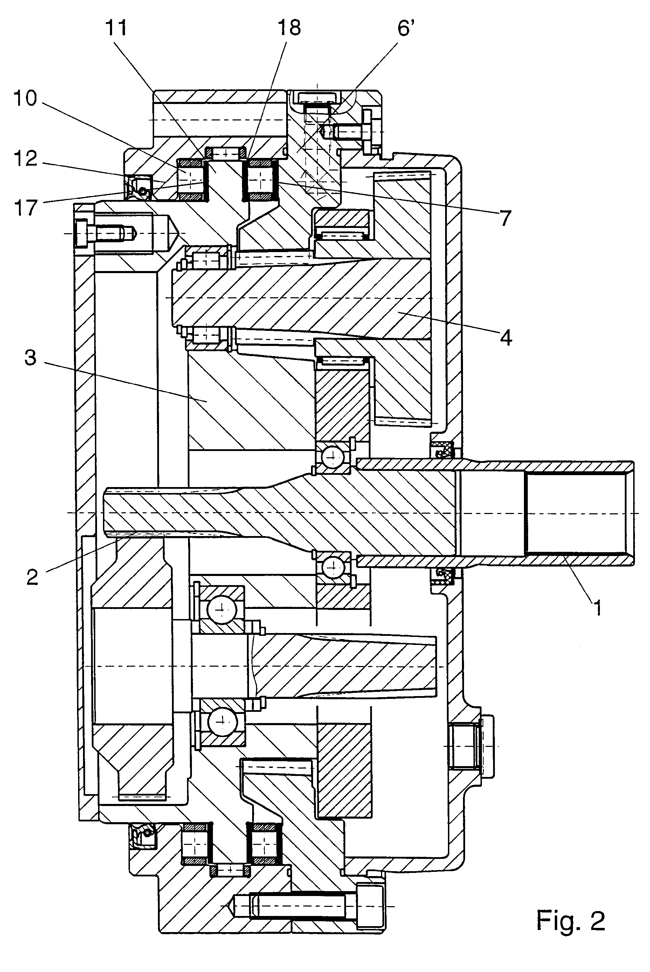

Wie Fig. 2 zeigt, sind die Lagerlaufbahnen des mittleren Lagerbordes 11, der mit dem umlaufenden Planetenträger einstückig ausgestaltet ist, durch aufgelegte Axiallagerscheiben 17, 18 mit für die Wälzlagerbeanspruchung geeigneter Härte und Oberflächengüte gebildet, wobei der umlaufende Innenteil, d. h. der Planetenträger nicht mehr aus einem typischen Lagerwerkstoff bestehen muß, sondern aus einen weicheren und damit billigeren Werkstoff hergestellt werden kann. Der Lagerbord als integraler Bestandteil des umlaufenden Innenkörpers ist zur mittelbaren Lastabstützung weiterhin erforderlich, wobei der Lagerbord durch die aufgelegten Axiallagerscheiben 17, 18 armiert wird und vor Wälzbeanspruchung geschützt wird.

Insbesondere bei kleineren Lageranordnungen ist es auch vorteilhaft, die Axiallagerscheiben 17, 18 aus mit hoher Oberflächengüte gewalztem Blech zu stanzen und anschließend zu härten, wobei nach einer Wärmebehandlung lediglich ein Polieren, jedoch kein Schleifen stattfinden muß. Entsprechend dünnwandig gestaltete Axiallagerscheiben können sich trotz des unvermeidlichen Verzuges aus der Wärmebehandlung durch Anlage an den ausreichend starr zu gestaltenden und formgenau zu fertigenden zugeordneten Lagerborden derart angleichen, daß sie eine ausreichend ebene Wälzlaufbahn bilden. Selbstverständlich ist in diesem Fall die in Figur 1 mit 7 bezeichnete Abstimmscheibe zugleich die Axiallagerscheibe.

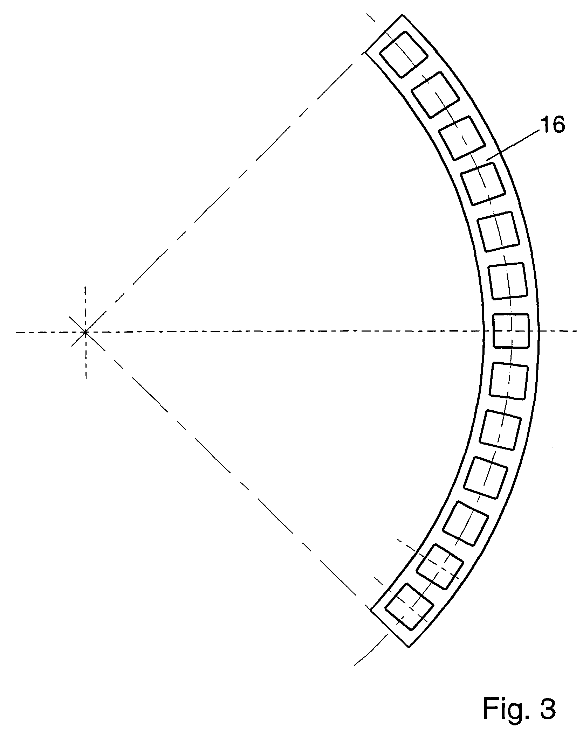

Fig. 3 zeigt ein Segment 16 in Form eines Viertelkreises als Kunststoffteilring, aus dem eines der Axiallager gebildet werden kann. Zu diesem Zweck weist der Kunststoffring eine Vielzahl von Aussparungen auf, in die die Wälzkörper eingesetzt werden. Die einzelnen Segmente, z. B. vier Segmente, müssen nicht fest miteinander verbunden werden, sondern können in den Hohlraum des Getriebes eingelegt werden, wobei ein Kunststoffring Vorteile hinsichtlich der Herstellungskosten mit sich bringt.

### Bezugszeichen

- 1: Antriebswelle
- 2: Sonnenrad
- 3: Planetenträger
- 4: Planetenrad
- 5: Planetenträger
- 6: Hohlrad
- 6': äußeres Lagerbord
- 7: Abstimmscheibe
- 8: Axiallager
- 9: Radiallager
- 10: Axiallager
- 11: mittlerer Lagerbord
- 12: äußerer Lagerbord
- 13: Planetenlager
- 14: Flansch des Planetenträgers
- 15: Befestigungsflansch
- 15: Lagerringsegment
- 17: Axiallagerscheibe
- 18: Axiallagerscheibe

## Patentansprüche

1. Planetengetriebe mit einem angetriebenen Sonnenrad, einem Hohlrad und Planetenrädern, die auf einem Planetenträger dergestalt gelagert sind, daß sie im Zahneingriff mit dem Sonnenrad und dem Hohlrad stehen, sowie mit einer Lageranordnung für die Aufnahme von äußeren Betriebslasten, dadurch **gekennzeichnet,** daß die Lageranordnung aus drei Rollenlagern mit zylindrischen Wälzkörpern besteht, von denen zwei als Axiallager (8, 10) mit planen Laufflächen ausgestaltet sind, die gegeneinander angestellt sind, während das dritte als Radiallager (9) mit zylindrischen Laufflächen ausgestaltet ist.

2. Planetengetriebe nach Anspruch 1, dadurch **gekennzeichnet,** daß die beiden Axiallager (8, 10) zwischen einem mittleren Lagerbord (11) und einem entsprechenden äußeren Lagerbord (6, 12) angeordnet sind.

3. Planetengetriebe nach Ansprüchen 1 und 2, dadurch **gekennzeichnet,** daß der mittlere Lagerbord (11) integraler Bestandteil des umlaufenden Planetenträgers (3, 5) ist und daß die beiden äußeren Lagerborde (6, 12) integraler Bestandteil eines, in radialer Richtung gesehen, äußeren Befestigungsflansches (15) des Hohlrades (6) sind.

4. Planetengetriebe nach Ansprüchen 1 und 2, dadurch **gekennzeichnet,** daß der mittlere Lagerbord integraler Bestandteil des in radialer Richtung gesehen, äußeren Befestigungsflansches ist und daß die beiden äußeren Lagerborde integraler Bestandteil des umlaufenden Planetenträgers sind.

5. Planetengetriebe nach einen der vorhergehenden Ansprüche, dadurch **gekennzeichnet,** daß das Radiallager (9), in axialer Richtung gesehen, zwischen den beiden Axiallagern (8, 10) angeordnet ist.

6. Planetengetriebe nach einem der vorhergehenden Ansprüche, dadurch **gekennzeichnet,** daß der mittlere Lagerbord (11) auf drei Seiten mit Lagerlaufbahnen versehen ist.

7. Planetengetriebe nach einem der vorhergehenden Ansprüche, dadurch **gekennzeichnet,** daß die beiden den Axiallagern (8, 10) zugewandten Lagerlaufbahnen des mittleren Lagerbordes (11) mit Axiallagerscheiben (17, 18) versehen sind, die eine größere Härte und eine bessere Oberflächengüte aufweisen als das Material des Lagerbordes (11).

8. Planetengetriebe nach einem der vorhergehenden Ansprüche, dadurch **gekennzeichnet,** daß eine der Axiallagerscheiben (17, 18) als Abstimmscheibe (7) ausgebildet ist.

9. Planetengetriebe nach einem der vorhergehenden Ansprüche, dadurch **gekennzeichnet,** daß jedes Axiallager (8, 10) eine Vielzahl von Wälzkörpern aufweist, die in angepassten Aussparungen eines Kunststoffringes (16) sitzen, der aus mehreren Segmenten besteht, die in den Hohlraum des Getriebes eingelegt werden, ohne miteinander verbunden zu sein.
